# EUROPEAN PATENT SPECIFICATION

(11) **EP 0 940 286 B1**
(45) Date of publication and mention of the grant of the patent: **07.04.2004**
(21) Application number: 99301486.9
(22) Date of filing: 26.02.1999
(51) Int. Cl.: B60K 17/35, B60K 23/08, F16H 48/20, B60K 23/04

(54) **Magnetorheological clutches for motor vehicle driveline components**
Magnetorheologische Kupplungen für Antriebsstrangbauteile eines Kraftfahrzeugs
Embrayages à fluide magnétorhéologique pour composants de ligne de transmission d'un véhicule

(30) Priority: 04.03.1998 US 34962
(43) Date of publication of application: 08.09.1999
(73) Proprietor: BorgWarner, Inc., Auburn Hills, MI 48326-1782 (US)
(72) Inventor: Isley, Loren D. Jr., Clarkston, MI 48348 (US); Kelley, William R. Jr., Novi, MI 48374 (US)
(74) Representative: Lerwill, John

(56) References cited:
- DE-A- 3 612 189
- DE-A- 19 737 766
- US-A- 4 440 042
- US-A- 4 718 303
- US-A- 5 407 024
- US-A- 5 599 474
- US-A- 5 704 863

## Description

The invention relates generally to magnetorheological clutches and more particularly to magnetorheological clutches for use in motor vehicle power transmission system components such as transmissions, transfer cases, differentials and the like.

The performance advantages of four-wheel vehicle drive systems are well recognized. Improved vehicle stability while traversing rain soaked or ice or snow covered highways, handling and control on gravel or uneven pavement and simply maintaining traction in off-road situations are all readily acknowledged benefits. Concomitant, though less desirable characteristics of four-wheel drive systems, relate to increased vehicle weight and increased driveline friction which result in increased fuel consumption. Such increased driveline friction and fuel consumption results from the increased number of driven components, e.g., shafts, bearings and differential gear/sets, and is especially significant in systems which are engaged full-time.

Such full-time four-wheel drive systems with direct coupling between the front and rear prop shafts represent one of the earlier four-wheel driveline configurations. A significant shortcoming of this arrangement involves a variation of a problem addressed by conventional rear differentials. As a vehicle negotiates a corner, the front wheels traverse paths of longer average radius and length than the rear wheels. Hence, the front driveline must rotate more rapidly during a turn. If unable to do so, due to the common drive between the front and rear drivelines, the drive shafts will wind up in opposite directions until force produced by the stored (wind-up) torque in the drive shafts exceeds the frictional forces acting on the tires, the tires momentarily lose frictional contact, the drivelines unwind and the vehicle hops. Such operating conditions are both unacceptable to design engineers and unsettling to drivers. A conventional differential installed between the two drivelines such that they are capable of rotation at slightly different speeds (just as the left and right driven axles of a conventional vehicle are able to accommodate speed differences) solves this problem.

However, the disposition of a differential between the front and rear drivelines of a four-wheel drive vehicle creates a problem similar to that of a conventional differential in a rear axle: the undesirable ability of one tire with less traction to spin while the other tire with traction receives no power. In four-wheel drive vehicles, this problem was addressed, for example, by the device disclosed in co-owned US-A-4,718,303. Here, an electromagnetic clutch assembly progressively locks elements of a center differential in order to ensure power delivery to all four wheels.

In the next evolutionary step, the differential was eliminated and an electromagnetic clutch was utilized to directly transfer torque from the primary driveline to the secondary driveline as needed. See, for example, co-owned US-A-5,407,024. With an increasingly sophisticated array of vehicle condition sensors and a corresponding increase in computing power and sophistication of computer software, it becomes apparent that improvements are also possible in the structure and operation of the torque distributing clutches of these and other driveline systems. The present invention is directed to such devices which provide improved modulating control, faster operation and reduced electrical energy consumption.

DE 3612189 having the features of the preamble of claims 1 and 10, respectively, discloses a vehicle transmission system which includes a clutch systems having first and second pluralities of interleaved clutch plates, a magnetorheological fluid disposed between said interleaved clutch plates, and a magnetic flux source disposed to interact with said fluid to control the torque transfer through the clutch, said clutch being used in a differential as well as at various locations along the primary and secondary drive lines of a four-wheel drive power train.

According to one aspect of the present invention there is provided a motor vehicle transfer case, comprising, in combination, an input member, an output member, a first plurality of circular clutch plates disposed for rotation with said input member, a second plurality of circular clutch plates disposed for rotation with said output member and interleaved with said first plurality of circular clutch plates, a magnetorheological fluid disposed between said interleaved first and second pluralities of clutch plates and, a magnetic flux source disposed adjacent said interleaved first and second plurality of circular clutch plates, characterised in that said first and second plurality of clutch plates includes a plurality of arcuate slots in which arcuate spacers are mounted.

The present invention further provides a motor vehicle differential comprising, in combination, an input component, a gear set driven by said input component and having an output component, a pair of magnetorheological clutch assemblies driven by said output component, each of said magnetorheological clutch assemblies have an input member, an output member, a first plurality of circular clutch plates disposed for rotation with said input member, a second plurality of circular clutch plates disposed for rotation with said output member and interleaved with said first plurality of clutch members, magnetorheological fluid disposed between said interleaved plurality of clutch members and an electromagnetic coil disposed adjacent said interleaved plurality of clutch members; characterised in that said first and second plurality of circular clutch plates include a plurality of arcuate slots in which arcuate spacers are mounted.

A motor vehicle drive line component includes an input member, an output member, and a first plurality of clutch members interleaved with a second plurality of clutch members. The clutch members may be either flat, circular plates or discs, or concentrically disposed bands or annuli. The first and second pluralities of clutch members are coupled to the respective input and output members and are disposed in a sealed chamber filled with a magnetorheological fluid. An adjacent electromagnetic coil and ferrous housing components provide and concentrate magnetic flux in the chamber. When the electromagnetic coil is provided with electrical energy, the magnetorheological fluid becomes a highly viscous pseudo-solid, facilitating torque transfer through the clutch and hence between said input and output members. When electrical energy to the coil is terminated, the magnetorheological fluid reverts to a non-viscous, fluid state, decoupling the clutch members. Modulating (proportional or stepwise) torque transfer may be achieved with appropriately modulated electric drive signals to the electromagnetic coil. The motor vehicle drive line component may be a transfer case, a differential or the like.

Thus, it is an object of the present invention to provide a motor vehicle driveline component incorporating a magnetorheological clutch assembly.

More particularly, the magnetorheological clutch assembly has a plurality of interleaved clutch discs disposed in a magnetorheological fluid, which clutch discs preferably take the form of concentric clutch annuli disposed in a magnetorheological fluid.

The magnetorheological fluid clutch assembly is thus capable of modulating control of torque throughput in the driveline component, which might be a transfer case, a differential or the like.

In order that the invention may be well understood, there will now be described some embodiments thereof, given by way of example, reference being made to the accompanying drawings, in which:
Figure 1 is a diagrammatic, plan view of a motor vehicle driveline and transfer case incorporating the present invention;
Figure 2 is a full, sectional view of a motor driveline transfer case incorporating a magnetorheological clutch according to the present invention;
Figure 3 an enlarged, fragmentary, sectional view of a motor vehicle driveline transfer case incorporating a magnetorheological clutch not according to the present invention;
Figure 3A is a greatly enlarged, fragmentary, sectional view of interleaved clutch members and magnetorheological fluid in a motor vehicle driveline clutch not according to the present invention;
Figure 4 is a full, sectional view of a motor vehicle driveline transfer case incorporating a first alternate embodiment magnetorheological clutch according to the present invention;
Figure 5 is an enlarged, fragmentary, sectional view of a motor vehicle driveline transfer case incorporating the first alternate embodiment magnetorheological clutch according to the present invention;
Figure 6 is a greatly enlarged, fragmentary view of a clutch disc or plate of a magnetorheological clutch according to the first alternate embodiment and showing the details of the present invention;
Figure 7 is a diagrammatic, plan view of a motor vehicle driveline and rear differential assembly incorporating a second alternate embodiment;
Figure 8 is a full, sectional view of a motor vehicle driveline differential incorporating a second alternate embodiment magnetorheological clutch; and
Figure 9 is an enlarged, fragmentary, sectional view of a motor vehicle driveline differential incorporating the second alternate embodiment magnetorheological clutch.

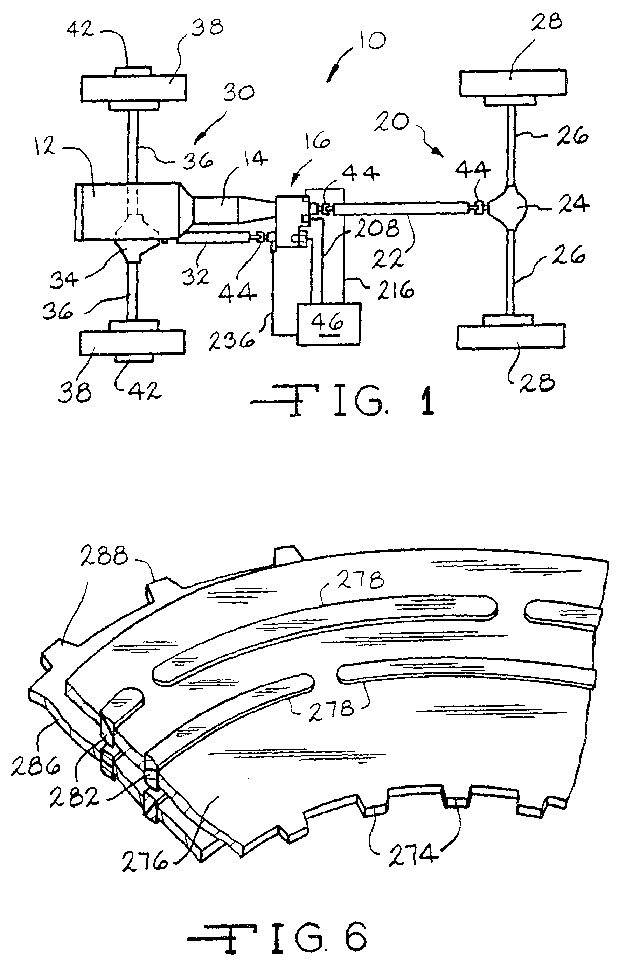

Referring now to Figure 1, a vehicle drive system incorporating the present invention is illustrated and generally designated by the reference numeral 10. The vehicle drive system 10 includes a prime mover, such an internal combustion engine 12, which drives a conventional transmission 14 which may either be a manual transmission with a clutch or an automatic transmission. The output of the transmission 14 drives a transfer case assembly 16. In turn, the transfer case assembly 16 is operably coupled to and drives a rear or primary driveline 20 having a rear or primary drive shaft 22 which is operably coupled to and drives a rear or primary differential 24. The primary or rear differential 24 drives a pair of aligned primary or rear axles 26 which are coupled to a respective pair of primary or rear tire and wheel assemblies 28.

The transfer case assembly 16 also provides torque to a front or secondary driveline 30. The secondary driveline 30 includes a front or secondary drive shaft 32 which in turn drives the front or secondary differential 34. The secondary differential 34 operates in conventional fashion and provides drive torque through a pair of aligned front or secondary axles 36. A pair of front or secondary tire and wheel assembles 38 are disposed at the front of the vehicle. A pair of locking hubs 42 are operably disposed between a respective one of the front or secondary pair of axles 36 and the front tire and wheel assemblies 38. The locking hubs 42 may be either remotely operated and thus include electrical or pneumatic operators or may be manually activated. Alternatively, front axle disconnects (not illustrated) may be housed within the front or secondary differential 34 and the axle disconnects may be activated or deactivated to couple or uncouple the secondary axles 36 from the output of the secondary differential 34. Finally, both the primary driveline 20 and the secondary driveline 30 may include suitable and appropriately disposed universal joints 44 which function in conventional fashion to allow static and dynamic offsets and misalignments between the various shafts and components.

The system 10 also include a microcontroller 46 having various programs and subroutines which receive data from various vehicle sensors and provides a control output to achieve the design goals of the present invention which will be more fully described below.

It should be understood that the designations "primary" and "secondary" appearing both above and below refer to drivelines and driveline components in the system 10 which are primarily and secondarily intended to propel a vehicle. That is, in the system 10 illustrated, the inventors describe a vehicle which is commonly referred to as a rear wheel drive vehicle in which the rear tire and wheel assemblies 28 primarily, from both a time and torque standpoint, propel the vehicle. Hence, the secondary driveline 30 and the front or secondary tire and wheel assemblies 38 typically function intermittently, that is, on an as needed basis, to provide improved vehicle performance and stability in adverse driving conditions. It should be understood, however, that the operating components described herein are fully and equally usable and suitable for a vehicle wherein the primary driveline and tires are disposed at the front of the vehicle, that is, a vehicle commonly referred to as a front wheel drive vehicle, and the secondary driveline and tires are located toward the rear of the vehicle. Hence, the designations "primary" and "secondary" broadly and properly characterize the function of the individual drivelines rather than their specific locations.

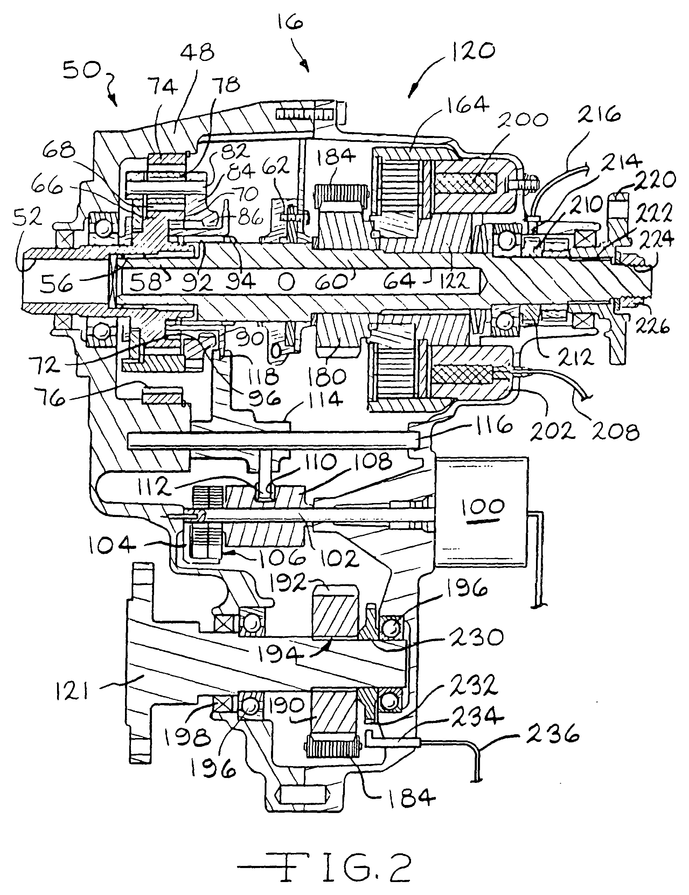

Referring now to Figure 2 it will be appreciated that the transfer case assembly 16 includes a multiple part, typically cast, housing 48 having various openings for shafts and fasteners and various mounting surfaces and grooves for oil seals, bearings, seal retaining rings and other internal components as will be readily appreciated. The transfer case assembly 16 also includes a planetary gear assembly 50 which is driven by an input shaft 52 rotatably supported within the transfer case assembly 16. The input shaft 52 is coupled to and driven by the output of the transmission 14. The input shaft 52 defines a re-entrant bore 54 which receives a roller bearing assembly 56. The roller bearing assembly 56, in turn, receives and rotatably supports the forward terminus 58 of a primary (rear) output shaft 60. A gerotor pump 62 is secured about the output shaft 60, providing lubricating fluid under pressure to a passageway 64 which extends axially within the output shaft 60 and distributes lubricating and cooling fluid to components of the transfer case assembly 16.

In the planetary gear assembly 50, the input shaft 52 defines an enlarged, bell-shaped region 66 having a plurality of external teeth 68 which define a sun gear 70. On the inner surface of the bell-shaped region 66 of the input shaft 52 are a plurality of internal or female gear teeth 72. Axially aligned with the sun gear teeth 68 is a ring gear 74 having a plurality of internal or female gear teeth 76. A plurality of pinion gears 78, one of which is illustrated in Figure 2, are rotatably received upon a like plurality of stub shafts 82 which are fixedly mounted within a carrier 84. The carrier 84 includes a plurality of internal or female gear teeth 86 on a surface generally axially adjacent but spaced from the internal gear teeth 72 defined by the input shaft 52. The planetary gear assembly 50 is more fully described in co-owned U.S. No. 4,440,042.

An axially sliding dog clutch 90 is received about the output shaft 60. The dog clutch 90 defines a plurality of internal or female splines or gear teeth 92 which are complementary to and mate with a like plurality of external or male splines or gear teeth 94 disposed about the periphery of the output shaft 60. The dog clutch 90 thus rotates with the output shaft 60 but may slide axially therealong. The dog clutch 90 includes a defined, axially extending region of external or male gear teeth 96 which are complementary to the teeth or splines 72 and 86 disposed on the input shaft 52 and the planetary gear carrier 84, respectively.

The dog clutch 90 is axially translatable between a first, leftmost position, illustrated in Figure 2, wherein the external teeth 96 engage the gear teeth 72 and provide direct drive between the input shaft 52 and the output shaft 60 and a second, rightmost position, as viewed in Figure 2, wherein the external gear teeth 96 of the dog clutch 90 engage the gear teeth 86 on the carrier 84 and provide a reduced speed drive between the input shaft 52 and the output shaft 60 in accordance with the gear ratio provided by the planetary gear assembly 50. The dog clutch 90 may also be moved to a third, neutral position mid-way between the leftmost, direct drive position and the rightmost reduced speed drive position. In this middle position, the input shaft 52 is disconnected from the output shaft 60 and no torque is transferred therebetween.

The position of the dog clutch 90 is commanded by an electric shift control motor 100. The electric shift control motor 100 rotates a drive shaft 102. The drive shaft 102 is suitably supported for rotation with the housing 48 of the transfer case assembly 16. The position of the drive shaft 102 may be monitored and read by an encoder assembly (not illustrated) which provides information about the current position of the drive shaft 102 and the dog clutch 90 to the microcontroller 46.

The drive shaft 102 is coupled to a radially extending arm 104. The arm 104 is connected to one end of a spiral spring assembly 106. The other end of the spring assembly 106 is connected to a cylindrical cam 108. The spring assembly 106 functions as a resilient, energy storing coupling between the drive shaft 102 and the cylindrical cam 108 to absorb differences between the movement commanded by the shift control motor 100 and the driven components so that the shift motor 100 is allowed to reach its final requested position. The spring assembly 106 allows smooth and prompt response to a requested repositioning of the dog clutch 90 in situations where the gear teeth 96 of the dog clutch 90 do not immediately engage the internal gear teeth 72 of the input shaft 52 or the internal gear teeth 86 of the carrier 84. When relative rotation of the dog clutch 90 allows engagement of the aforementioned clutch teeth, potential energy stored in the spring assembly 106 rotates the cylindrical cam 108 to its requested position, thus completing the requested shift.

The cylindrical cam 108 defines a helical track 110 which extends preferably about 270° around the cam 108. The helical track 110 receives a pin or cam follower 112 which is coupled to and translates a fork assembly 114. The fork assembly 114 is supported for bi-directional translation upon a fixed shaft 116 and includes an arcuate channel or groove 118 which engages the periphery of the dog clutch 90. Rotation of the shaft 102 axially repositions the cam follower 112 and axially positions the dog clutch 90 in one of the three positions described above. It will be appreciated that the planetary gear assembly 50 including the mechanism of the dog clutch 90 which provides dual range, i.e., high and low speed, capability to the transfer case assembly 16 is optional and that the vehicle drive system 10 is fully functional as a single speed, direct drive unit and may be utilized without these components and the dual speed range capability provided thereby.

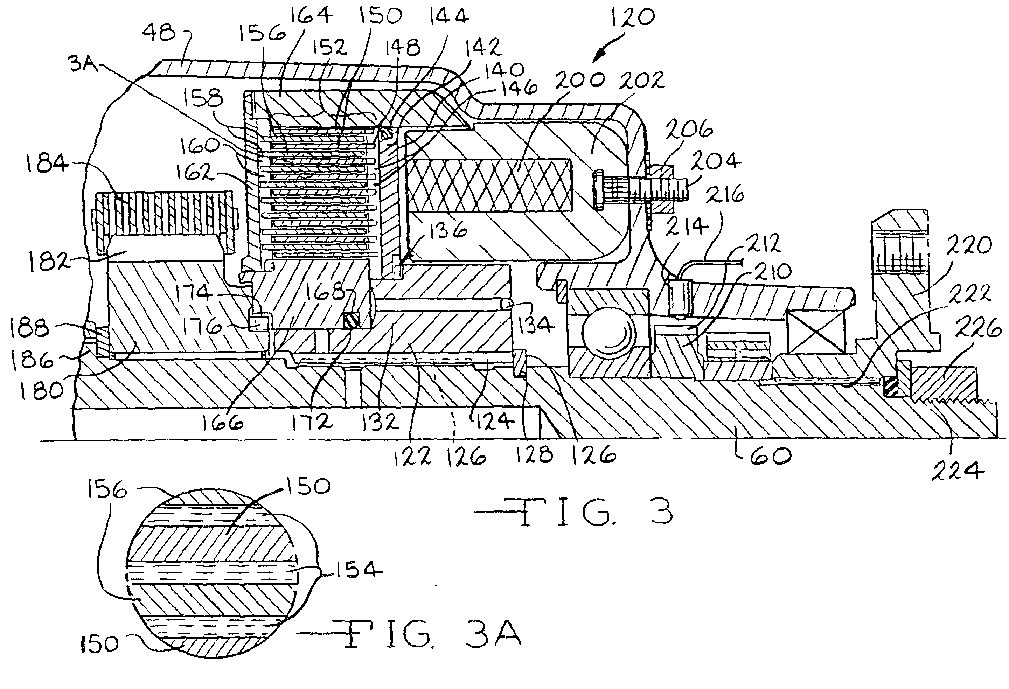

Referring now to Figures 2 and 3, the transfer case assembly 16 also includes a magnetorheological fluid clutch assembly 120. The clutch assembly 120 is disposed within the housing 48 of the transfer case assembly 16 and is operably disposed between the primary output shaft 60 and a secondary drive shaft 121. The clutch assembly 120 includes a cylindrical collar 122 having internal or female splines 124 which mate with complementarily configured external or male splines 126 on the primary output shaft 60. The cylindrical collar 122 is preferably made of a magnetic material such as steel. A snap ring 126 which seats within a complementarily configured circumferential groove 128 formed in the output shaft 60 axially restrains the cylindrical collar 122.

The collar 122 includes a plurality of axially oriented vent passageways 132, one of which is illustrated in Figure 3. The passageways 132 are substantially sealed by a like plurality of press-fit spheres such as ball bearings 134 which provide a fluid tight, though not air tight, seal. Coupled to the cylindrical collar 122 by a set of interengaging splines 136 and a suitable sealing adhesive is a radially extending flat, first circular plate 140. The first circular plate 140, which is preferably made of a non-ferrous material such as aluminum, includes a circumferential peripheral channel 142 which receives a conventional O-ring seal 144. The first circular plate 140 also includes a plurality of radially extending channels or recesses 146 which cooperate with a like plurality of projections or splines 148 on a first plurality of concentric clutch bands or annuli 150 disposed in a chamber 152. The first plurality of clutch bands or annuli 150 are preferably made of a ferrous material such as low carbon steel. The first plurality of clutch annuli 150 rotate with the first circular plate 140. As illustrated in Figure 3A, the chamber 152 is filled with high stress magnetorheological fluid 154 manufactured by the Lord Corporation of Cary, North Carolina such as those described in United States Patents Nos. 5,645,752, 5,599,474 and 5,578,238. The chamber 152 may be substantially permanently filled with the magnetorheological fluid 154 when the components of the clutch assembly 120 are being assembled or, for example, the outer annular member 154 may be equipped with a removable filler plug (not illustrated) which may be installed and removed as necessary to fill, drain and retain the magnetorheological fluid 154 in the chamber 152.

A second plurality of concentric clutch bands or annuli 156 are interleaved with the first plurality of bands or annuli 150 and include a plurality of splines or projections 158 which are received within a complementarily configured radial array of channels or recesses 160 on a second circular plate 162. Like the first plurality of clutch bands or annuli 150, the second plurality of clutch bands or annuli 156 are preferably made of a ferrous material such as low carbon steel. The second circular plate 162, which is also preferably made of a non-ferrous material such as aluminum, is sealingly and positively secured to an outer annular member 164 by, for example, interengaging splines and a sealing adhesive. The outer annular member 164 is preferably formed of a ferrous material such as iron. The O-ring 144 seals,against the inner surface of the outer annular member 164. Radially inwardly from the second circular plate 162 and, again, positively and sealingly secured to the circular plate 162 by, for example, interengaging splines and a sealing adhesive, is a circular collar 166. The circular collar 166 is also preferably formed of a magnetic material such as steel and is generally disposed within a complementarily configured shoulder or necked portion of the cylindrical collar 122. The circular collar 166 defines an internal circumferential channel 168 which receives an O-ring 172. The O-rings 144 and 172 thus tightly seal the chamber 152 while facilitating relative rotation at the interface between the circular plate 140 and the outer annular member 164 and the cylindrical collar 122 and the circular collar 166, respectively.

The circular collar 166 includes splines, bosses or lugs 174 which seat within or receive complementarily configured splines, bosses or lugs 176 formed in an aligned portion of a chain drive sprocket 180 which is freely, rotatably supported on the primary output shaft 60. Thus, the chain drive sprocket 180 rotates with the circular collar 166, the second plurality of clutch bands or annuli 156, the second circular plate 162 and the outer annular member 164. The chain drive sprocket 180 includes a plurality of chain drive teeth 182 which engage a drive chain 184. The axial position of the chain drive sprocket 180 is restricted by a step or shoulder 186 in the output shaft 60 and a flat washer 188 facilitates the free rotation of the chain drive sprocket 180 on the primary output shaft 60.

As illustrated in Figure 2, the drive chain 184 is received upon a driven chain sprocket 190 having chain teeth 192. The driven chain sprocket 190 is secured to the secondary output shaft 121 by an interengaging spline set 194 or similar secure connection. The secondary output shaft 121 is supported in the housing 48 by a pair of anti-friction bearings such as ball bearing assemblies 196. An oil seal 198 provides a suitable fluid tight seal between the secondary output shaft 32 and the housing 48.

As illustrated in Figure 2 and 3, disposed on the opposite side of the interleaved plurality of clutch bands or annuli 150 and 156 and adjacent the circular plate 140 is an electromagnetic coil 200 which is disposed within a magnetic, flux concentrating coil housing 202. The coil housing 202 is preferably made of a ferrous material such as iron. A cantilevered portion of the outer annular member 164 is adjacent and overhangs the coil housing 202. The coil housing 202 is secured to the housing 48 of the transfer case assembly 16 by a plurality of threaded studs 204 and complementarily threaded fasteners 206. A single or double electrical conductor 208 is provided with energy from a controller such as the microcontroller 46.

A primary tone wheel 210 is disposed upon the primary output shaft 60, rotates therewith and includes a plurality of teeth 212. Disposed in sensing relationship with the primary tone wheel 210 is a variable reluctance or Hall effect sensor 214 which provides a signal in an output line 216 representative of the speed of the primary output shaft 60 to the controller 46. An output flange 220 is secured to the primary output shaft 60 by an interengaging spline set 222 and is retained by a threaded retainer such as a nut 226 which is received upon a complementarily threaded portion 224 of the primary output shaft 60. A secondary tone wheel 230 is similarly disposed on and rotates with the secondary output shaft 121. The secondary tone wheel 230 includes a plurality of teeth 232. A variable reluctance or Hall effect sensor 234 is disposed in sensing relationship with the teeth 232 of the secondary tone wheel 230 and includes an output line 236 which provides a signal representative of the speed of the secondary output shaft 32 to the controller 46.

In operation, the magnetorheological fluid clutch assembly 120 represents the sole mechanical, torque transferring connection or path between the primary driveline 20, and specifically the primary output shaft 60 of the transfer case assembly 16, and the secondary driveline assembly 30, and specifically the secondary output shaft 121. When electrical energy is supplied to the electromagnetic coil 200, the coil housing 202 as well as the cylindrical collar 122, the outer annular member 164 and the circular collar 166 direct and focus the electromagnetic flux into the chamber 152 which is occupied by the magnetorheological fluid 154. With increasing magnetic flux, the magnetorheological fluid 154 increases its viscosity, becoming a pseudo-solid and increasing coupling between the interleaved pluralities of clutch annuli 150 and 156, thus increasing the torque transfer capability between the primary output shaft 60 and secondary output shaft 121. As electric current to the electromagnetic coil 200 increases to a maximum level, the coupling and the torque transfer capability through the clutch assembly 120 likewise increases to a maximum level. When electric current to the electromagnetic coil 200 is reduced, the magnetorheological fluid 154 becomes less viscous and torque transfer capability reduces. When electric current to the coil 200 is removed, the magnetorheological fluid 154 returns to its non-solid, i.e., fluid, state, the coupling between the primary output shaft 60 and the secondary output shaft 32 is reduced to a minimum or negligible level and torque transfer capability effectively ceases.

It will be appreciated that the magnetorheological clutch assembly 120 is capable of modulating control of torque transfer commensurate with the electrical input to the electromagnetic coil 200. Such electrical input may, of course, be provided by a device such as the controller 46 which receives signals from various shaft speed sensors such as variable reluctance or Hall effect sensors 214 and 234 and suitable software which reads such speeds and commands engagement or disengagement of the magnetorheological clutch assembly 120 according to static or dynamic software including lookup tables, subroutines and related programs. Such an operating program may be like or similar to that described in co-owned United States Patent No. 5,407,204.

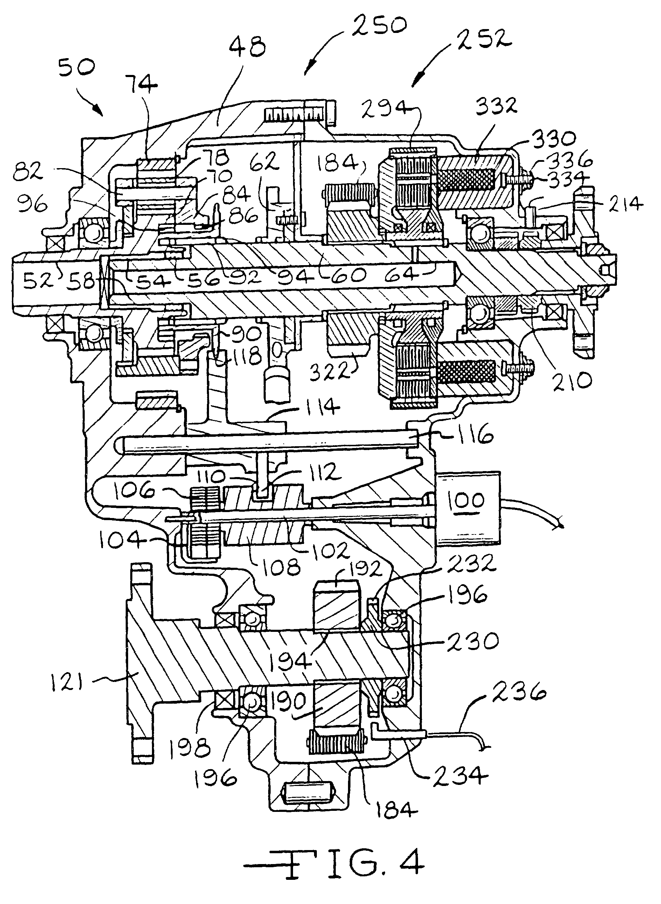

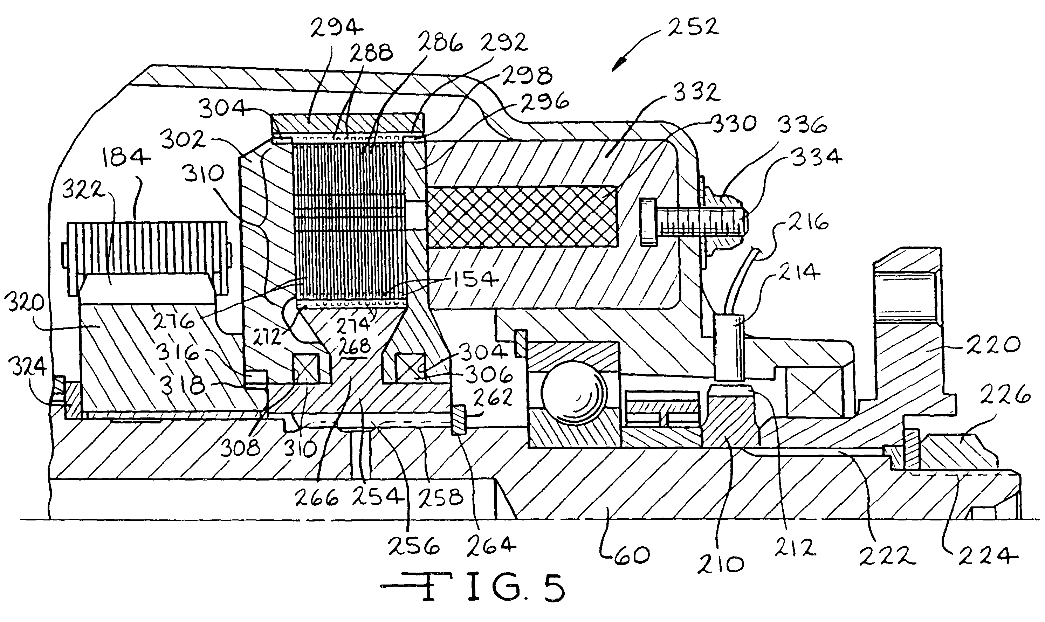

Referring now to Figures 4 and 5, a transfer case assembly 250 incorporating a first alternate embodiment magnetorheological clutch assembly 252 is illustrated. Whereas the preferred embodiment transfer case assembly 16 illustrated in Figures 2 and 3 includes a magnetorheological fluid clutch assembly 120 having concentrically arranged and interleaved clutch bands or annuli, the transfer case assembly 250 includes the first alternate embodiment magnetorheological clutch assembly 252 having flat, radially oriented, interleaved clutch plates or discs. As such, the transfer case assembly 250 is substantially similar to the preferred embodiment transfer case assembly 16 and includes the housing 48, the planetary gear assembly 50, the input shaft 52 having a bore 54 which receives the roller bearing assembly 56 which, in turn, supports the terminus 58 of the primary (rear) output shaft 60, the gerotor pump 62 and the lubricating passageway 64. The planetary gear assembly 50 includes the sun gear 70, the ring gear 74, the pinion gears 78, the stub shafts 82 and the carrier 84 having inwardly directed gear teeth 86. The dog clutch 90 includes splines or gear teeth 92 which mate with splines or gear teeth 94 on the output shaft 60 as well as male gear teeth 96. The position of the dog clutch 90 is commanded by the electric shift control motor 100 which rotates the drive shaft 102. The drive shaft 102 is coupled to and drives the axially extending arm 104 which engages one end of the spiral spring assembly 106. The opposite end of the spiral spring assembly 106 is secured to the cylindrical cam 108 having the helical track 110. The pin or cam follower 112 extends from the fork assembly 114 which is supported for bi-directional translation upon the fixed shaft 116 and includes the channel or groove 118 which engages the periphery of the dog clutch 90.

As noted, the transfer case assembly 250 includes the first alternate embodiment magnetorheological fluid clutch assembly 252 having flat, radially oriented, interleaved clutch plates or discs. A complexly configured circular collar 254 includes female or internal splines or gear teeth 256 which mate with complementarily configured external or male splines or gear teeth 258 formed in the output shaft 60. A snap ring 262 is received within acomplementary circumferential groove 264 formed in the primary output shaft 60 and axially restrains the circular collar 254. The circular collar 254 defines a narrow throat region 266 and wider, peripheral portion 268 which includes a plurality of axially extending channels or recesses 272 formed in its periphery. The channels or recesses 272 engage complementarily configured configurations or splines 274 formed on the inner diameter of a first plurality of circular clutch discs or plates 276.

As illustrated in Figure 6, in accordance with claims 1 and 10 each of the first plurality of clutch plates 276 defines two adjacent, circumferential bands of discontinuous, arcuate slots 278. The slots 278 each receive a complementarily configured arcuate spacer 282 of a suitably durable plastic such as nylon, Delrin or LCP plastic. Delrin is a registered trademark of E. I. DuPont de Nemours and Company. The spacers 282 are preferably just slightly thicker than the thickness of the clutch plates 276. For example, a total spacer thickness of about .050 inches (1.27 mm) greater than the thickness of the clutch plates 276, such that the spacers 282 extend beyond the surfaces of the clutch plate 276 approximately .025 inches (.63 mm) on each side has been found suitable. The open, non-magnetically active areas of the clutch plates 276 assist control and focus of magnetic flux.

Interleaved with a first plurality of clutch plates 276 is a second plurality of clutch discs or plates 286 having outwardly directed projections or splines 288 which are received within complementarily configured channels or recesses 292 on a peripheral annular member 294. Both the first and second pluralities of clutch discs or plates 276 and 286 respectively, are made of ferrous material such as low carbon steel. As illustrated in Figure 6, each of the second plurality of clutch plates 286 also preferably define two adjacent bands of discontinuous, arcuate slots 272 which each receive the arcuate spacers 282 described above. The annular member 294 is preferably made of aluminum. At a first end of the annular member 294 is a first circular plate 296 having male splines 298 disposed about its periphery that engage the channels or recesses 292 on the circular member 294. The first circular plate 296 is sealingly secured to the circular member 294 by a suitable sealing adhesive (not illustrated) disposed in the splined interconnection between the recesses 292 and the splines 298. A second circular plate 302 is disposed on the opposite side of the clutch plates 276 and 286 and likewise includes channels or recesses 304 which engage the splines 292 on the circular member 294. Again, a sealing adhesive (not illustrated) is disposed between the splines 292 and the recesses 304 when the second circular plate 302 is assembled to the annular member 294. The collar 266, the annular member 294 and the circular plates 296 and 304 define a chamber 310 which is filled with a high stress magnetorheological fluid 154 as described above. Again, the chamber 310 may be substantially permanently filled with the magnetorheological fluid 154 when the clutch assembly 252 is being manufactured or, for example, the annular member 294 may be equipped with a removable filler plug (not illustrated) to facilitate filling and draining of the magnetorheological fluid 154.

The first circular plate 296 includes an internal circumferential channel 304 which receives a suitable resilient, fluid tight seal member 306 which may be an O-ring or have another cross-section such as an X cross-section. Similarly, the second circular plate 304 includes an internal circumferential channel 308 which likewise includes a circular resilient seal member 310. Adjacent the seal channel 308 are disposed a plurality of splines or lugs 316 which are complementarily to and engage splines or recesses 318 on a chain drive sprocket 320. The chain drive sprocket 320 includes chain drive teeth 322 which engage the drive chain 184. The chain drive sprocket 320 is freely rotatably disposed upon the primary output shaft 60 and a flat washer 324 acts as a thrust bearing to facilitate such rotation.

Immediately adjacent the first circular plate 296 is an electromagnetic coil 330 which is disposed within a coil housing 332 which is preferably fabricated of a ferrous material such as iron. The coil housing 332 is secured to the housing 46 of the transfer case assembly 16 by a plurality of threaded bolts 334 and threaded fasteners such as nuts 336.

Referring again to Figures 4 and 5, the transfer case assembly 250 includes the tone wheel 210 disposed upon the primary output shaft 60. The tone wheel 210 rotates therewith and includes the plurality of teeth 212. Disposed in adjacent sensing relationship with the tone wheel 210 is the variable reluctance or Hall effect sensor 214 which provides a signal the line 216 to the controller 46 representative of the speed of the primary output shaft 60. The output flange 220 is secured to the primary output shaft 60 by the interengaging splines 222 and is retained on the threaded portion 224 of the primary output shaft 60 by a threaded retainer such as the nut 226. A tone wheel 230 is similarly disposed on and rotates with the secondary output shaft 121. The tone wheel 230 includes teeth 232. A variable reluctance or Hall effect sensor 234 is disposed in sensing relationship with the teeth 232 of the secondary tone wheel 230 and includes an output line 236 which provides a signal to the controller 46 representative of the speed of the secondary output shaft 121.

The operation of the transfer case 250, and specifically the first alternate embodiment magnetorheological clutch assembly 252, is substantially the same as operation of the magnetorheological fluid clutch assembly 120 in the transfer case assembly 16 described above. That is, electric current provided to the electromagnetic coil 330 produces a magnetic flux which extends into the chamber 310 filled with the magnetorheological fluid 154 and, as the electric current and magnetic flux increase, changes the magnetorheological fluid 154 from a liquid to a pseudo-solid thereby facilitating the transfer of torque through the clutch 252. Electric current may be provided to the electromagnetic coil 330 from the microcontroller 46 in accordance with various software, look-up tables, subroutines and the like as will be readily appreciated.

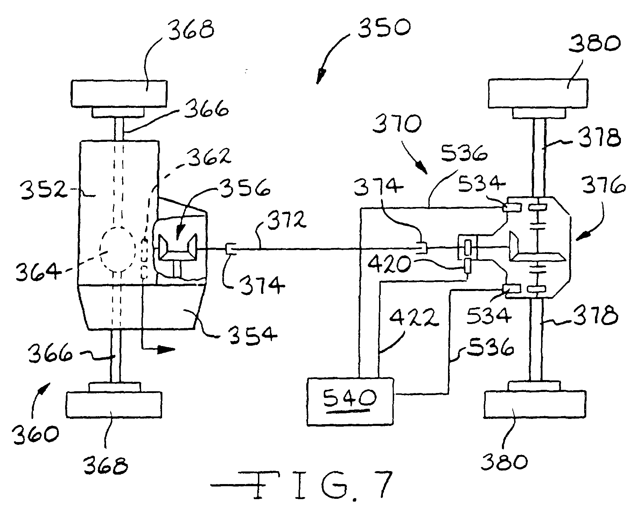

Referring now to Figure 7, a second alternate embodiment adaptive four-wheel vehicle drive train incorporating the present invention is diagrammatically illustrated and designated by the reference number 350. The four-wheel vehicle drive train 350 includes a transversely mounted prime mover 352 which is coupled to and directly drives a transaxle 354. The output of the transaxle 354 drives a beveled or spiral beveled gear set 356 which provides motive power to a primary or front driveline 360 comprising a front or primary propshaft 362, a front or primary differential 364, a pair of live front axles 366 and a respective pair of front or primary tire and wheel assemblies 368. It should be appreciated that the front or primary differential 364 is conventional.

The beveled or spiral beveled gear set 356 also provides motive power to a secondary or rear driveline 370 comprising a secondary propshaft 372 having appropriate universal joints 374, a rear or secondary differential assembly 376, a pair of live secondary or rear axles 378 and a respective pair of secondary or rear tire and wheel assemblies 380. As utilized herein with regard to the secondary differential assembly 376, the terms "differential" and "axle" are used interchangeably to identify a device for receiving driveline torque, distributing it to two transversely disposed wheels and accommodating rotational speed differences resulting from, inter alia, vehicle cornering. As such, the terms are intended to include devices such as the present invention which provide these functions but which do not include a conventional epicyclic gear train.

The following description relates to a vehicle wherein the primary driveline 360 is disposed at the front of the vehicle and, correspondingly, the secondary driveline 370 is disposed at the rear of the vehicle, such a vehicle commonly being referred to as a front wheel drive vehicle. Once again, designations "primary" and "secondary" utilized herein refer to drivelines providing drive torque at all times and drivelines providing supplemental or intermittent torque, respectively. These designations (primary and secondary) are utilized herein rather than front and rear inasmuch as the embodiment of the invention herein disclosed and claimed may be readily utilized with vehicles wherein the primary driveline 360 is disposed at the rear of the vehicle and the secondary driveline 370 and components within the secondary differential assembly 376 are disposed at the front of the vehicle.

Thus, the illustration in Figure 7, wherein the primary driveline 360 is disposed at the front of the vehicle should be understood to be illustrative rather than limiting and that the components and their general arrangement illustrated are equally suitable and usable with a primary rear wheel drive vehicle. In such a vehicle, the primary differential 364 would replace the secondary differential assembly 376 at the rear of the vehicle and the secondary differential assembly 376 would be moved to the front of the vehicle to replace the primary differential 364.

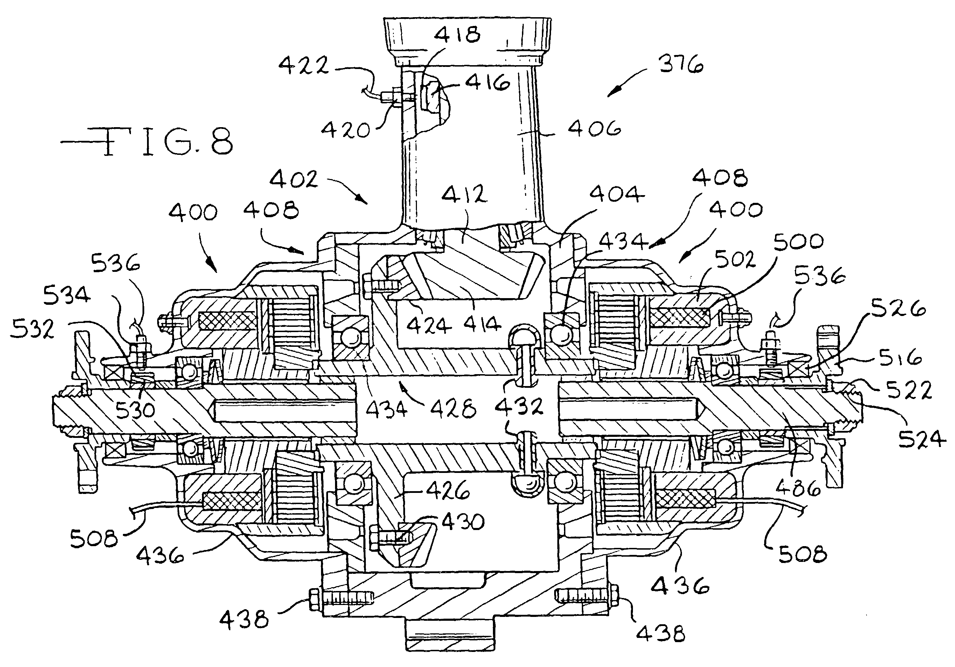

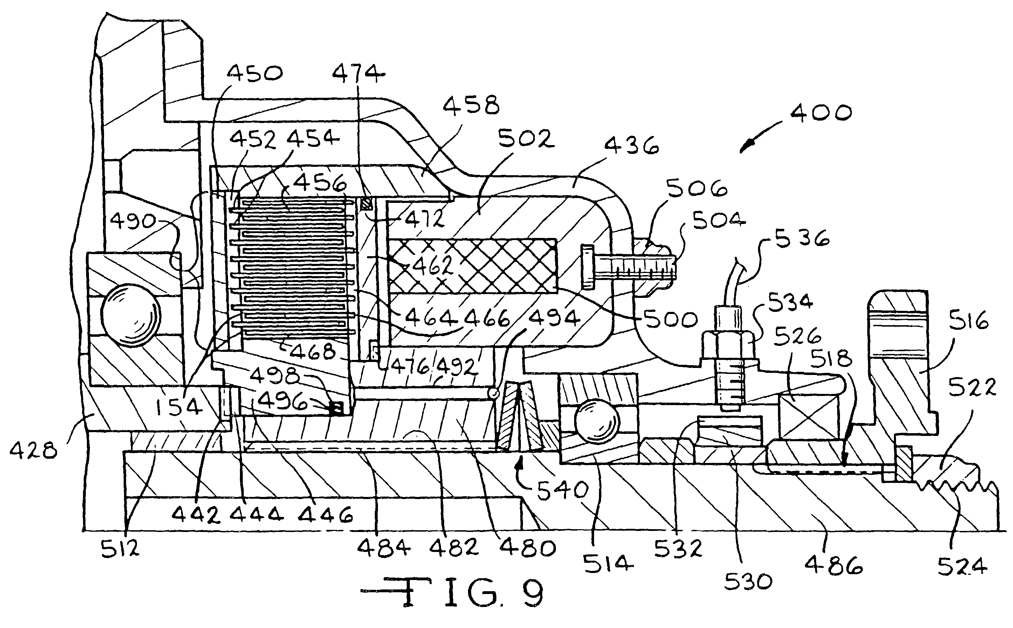

Referring now to Figures 8 and 9, the alternate embodiment vehicle drive train 350 includes a pair of magnetorheological clutch assemblies 400 similar to the clutch assembly 120 of the preferred embodiment but which are disposed in a differential housing assembly 402. The differential housing assembly 402 includes a center, generally annular portion 404 and a neck portion 406 which extends generally radially from the annular portion 404. The center portion 404 defines a pair of opposed, open sides 408. Disposed within the neck portion 406 and supported for rotation is an input shaft 412 which terminates in a bevel gear 414. The input shaft 412 may include an input tone wheel 416 having teeth 418. Disposed in sensing relationship adjacent the teeth 418 of the input tone wheel 416 is a variable reluctance or Hall effect sensor 420 which provides a signal representative of the speed of the input shaft 412 in a line 422.

The bevel gear 414 is in constant mesh with and transfers energy to a bevel ring gear 424 which is mounted upon a flange 426 which is preferably integrally formed with and extends radially from a hollow drive tube assembly 428. The ring gear 426 is secured to the flange 426 by a plurality of threaded fasteners 430. The drive tube assembly 428, as noted, is hollow and preferably includes a pair of scuppers 432 which collect and supply a cooling and lubricating fluid into the hollow drive tube assembly 428. The drive tube assembly 430 is supported in the annular portion 404 of the housing 402 by a pair of anti-friction bearings such as the ball bearing assemblies 434.

At each end of the drive tube assembly 428 is disposed, as noted above, an identical magnetorheological clutch assembly 400 which is housed in a bell housing 436. The bell housings 436 are secured to the annular portion 404 of the housing 402, over the open sides 408, by a plurality of threaded fasteners 438. Inasmuch as both of the clutch assemblies 400 are identical, only the clutch assembly 400 illustrated to the right in Figure 8 will be described, it being understood that the clutch assembly 400 to the left is in all respects identical in structure and function.

At each end of the drive tube assembly 428 are a plurality of splines or lugs 442 which engage complementarily configured splines or recesses 444 formed in a circular collar 446. The circular collar 446 is preferably formed of a magnetic material such as steel and is sealingly secured to a first circular plate 450 which includes a radially configured array or plurality of channels or grooves 452 which are engaged by a complementary plurality of male splines 454 extending from a first plurality of concentric clutch bands or annuli 456. The first circular plate 450 is preferably formed of a non-magnetic material such as aluminum and is sealingly secured to an outer annular member 458 by, for example, interengaging splines and a suitable adhesive. A second circular plate 462 is axially spaced from said first circular plate 450 and includes a second radial array or plurality of channels or grooves 464 on its face. The second circular plate 462 is also preferably formed of a non-magnetic material such as aluminum. The second array of grooves 464 are engaged by a complementarily configured plurality of splines 466 extending from a second plurality of clutch bands or annuli 468 interleaved with the first plurality of clutch plates 456. Preferably, both the first plurality of concentric clutch bands or annuli 456 and the second plurality of clutch bands or annuli 468 are solid and made of a ferrous material such as low carbon steel.

The second circular plate 462 defines a peripheral channel 472 which receives an O-ring 474 which sealingly engages the inner surface of the outer annular member 458. Adjacent the inner diameter of the second circular plate 458 is an interengaging spline set 476 which couples the second circular plate 462 to a cylindrical collar 480. A suitable sealing adhesive is also preferably utilized at this junction. The cylindrical collar 480 includes internal or female splines 482 which mate with complementarily configured external or male splines 484 on an output shaft 486. The cylindrical collar 480, the first circular plate 450, the annular member 458 and the second circular plate 462 define a chamber 490 which receives the first and second plurality of clutch bands or annuli 456 and 468 and is completely filled with magnetorheological fluid 154. A passageway 492 in the cylindrical collar 480 is sealed to prevent liquid flow by a spherical ball such as a ball bearing 494 but permits the passage of gas such as air from the chamber 490. The collar 446 is sealed against the cylindrical collar 480 by an O-ring 496 disposed in a circumferential channel 498 in the member 446.

Disposed on the opposite side of the second circular plate 462 from the chamber 490 and adjacent a cantilevered portion of the outer annular member 458 is an electromagnetic coil 500 which is disposed within a magnetic, flux concentrating coil housing 502. The coil housing 502 is preferably made of a ferrous material such as iron. The coil housing 502 is secured to the bell housing 436 by a plurality of threaded studs 504 and complementarily threaded fasteners 506. A single or double electrical conductor 508 provides electrical energy from a suitable source to the electromagnetic coil 500.

The output shaft 486 is supported within the drive tube assembly 428 by a journal or roller bearing 512 and is rotatably supported in the housing 436 by an anti-friction bearing such as the ball bearing assembly 514. An output flange 516 is secured to the output shaft 486 by an interengaging spline set 518 and is retained on the output shaft 486 by a threaded retainer such as a nut 522 which is received upon a complementarily threaded portion 524 of the output shaft 486. A suitable oil seal 526 provides a fluid tight seal between the output flange 516 and the bell housing 436.

A right output tone wheel 530R is disposed upon the right output shaft 486 and includes a plurality of teeth 532R. Disposed in sensing relationship with the right output tone wheel 530R is a first variable reluctance or Hall effect sensor 534R which provides a signal in an output line 536R representative of the speed of the right output shaft 486. As illustrated in Figure 8, the left output shaft also includes a tone wheel 530L having teeth 532L, a variable reluctance or Hall effect sensor 534L and an output line 536L. The sensors 534R and 534L as well as other vehicle sensors such as vehicle speed, throttle position, and steering angle sensors may provide signals to a microcontroller 540. Preferably, a pair of Belleville washers or similar spring washers and a suitable spacer ring assembly 540 are disposed between the cylindrical collar 480 and the ball bearing assembly 514 to maintain appropriate axial location of the components associated therewith relative to the electromagnetic coil housing 502.

Operation of the pair of magnetorheological clutch assemblies 400 disposed in the alternate embodiment vehicle drive train 350 is similar to the operation of the magnetorheological clutch 120 in the transfer case assembly 16 but the overall operation is distinct inasmuch as they are disposed in the differential assembly 376. Thus, whereas the coupling and torque throughput capability of each of the magnetorheological clutch assemblies 400 corresponds, as described above, to the magnitude of the electrical current provided independently to each of the electromagnetic coils 500, thus increasing or decreasing the coupling and torque throughput capability of the individual magnetorheological clutch assemblies 400, the overall operation of the dual clutch magnetorheological differential assembly 396 is a feature of the software, look-up tables and other computational features of the microcontroller 540. As such, the magnetorheological clutch assemblies 400 may be activated, either fully or proportionally, i.e., modulated, in response to speed differences between the left and right axle speed sensors 534R and 534L or average speed differences detected between the two speeds sensed by the sensors 534R and 534L when compared with the speed sensed by the input shaft sensor 420. Furthermore, these speeds may be compared to sensors from the primary driveline 360 at the opposite end of the vehicle. Various slip reduction and vehicle yaw control programs (software) in the microcontroller 540 may utilize this data to individually control the magnetorheological clutches 400 in the differential assembly 376.

## Claims

1. A motor vehicle transfer case (16), comprising, in combination, an input member (122,254), an output member (164,302), a first plurality of circular clutch plates (150,276) disposed for rotation with said input member, a second plurality of circular clutch plates (156,286) disposed for rotation with said output member and interleaved with said first plurality of circular clutch plates, a magnetorheological fluid (154) disposed between said interleaved first and second pluralities of clutch plates and, a magnetic flux source (200,330) disposed adjacent said interleaved first and second plurality of circular clutch plates, **characterised in that** said first and second plurality of clutch plates include a plurality of arcuate slots (278) in which arcuate spacers (282) are mounted.

2. A transfer case according to claim 1, wherein said input member (122,254) is coupled to a shaft (60) and said output member is coupled to a chain drive sprocket (180,320).

3. A transfer case according to claim 1 or claim 2, further including an input shaft (52) adapted to be driven by a transmission (14), a planetary gear speed reduction assembly (50) having an output (84) and a clutch assembly (90) for engaging said input shaft to said input member to achieve direct drive and engaging said output of said planetary gear speed reduction assembly to said input member to achieve reduced speed drive.

4. A transfer case according to any of the preceding clams, wherein said input member and said output member include fluid seals (144,168,306,310).

5. A transfer case according to any of the preceding claims, wherein said first and second plurality of circular plates (150,156) are annuli.

6. A transfer case according to claim 5, further including a flux directing metal annulus (164) extending around said annuli.

7. A transfer case according to claim 5 or claim 6, wherein said annuli are of concentrically disposed graduated sizes and are self-centering.

8. A transfer case according to any of the preceding claims, wherein said magnetic flux source (200,330) is an electromagnetic coil disposed in a housing (202,332).

9. A transfer case according to any of claims 1 to 7, wherein said magnetic flux source (200,330) is an electric coil driven by a modulated electrical signal.

10. A motor vehicle differential comprising, in combination, an input component (412), a gear set (414,424) driven by said input component and having an output component (428), a pair of magnetorheological clutch assemblies (400) driven by said output component, each of said magnetorheological clutch assemblies have an input member (446), an output member (480), a first plurality of circular clutch plates (456) disposed for rotation with said input member, a second plurality of circular clutch plates (468) disposed for rotation with said output member and interleaved with said first plurality of clutch members, magnetorheological fluid (154) disposed between said interleaved plurality of clutch members and an electromagnetic coil (500) disposed adjacent said interleaved plurality of clutch members; **characterised in that** said first and second plurality of circular clutch plates include a plurality of arcuate slots (278) in which arcuate spacers are mounted.

## Patentansprüche

1. Kraftfahrzeug-Verteilergetriebe (16), umfassend in Kombination ein Antriebselement (122, 254), ein Abtriebselement (164, 302), eine erste Mehrzahl von kreisförmigen Kupplungsscheiben (150, 276), die zur Drehung mit dem genannten Antriebselement angeordnet sind, eine zweite Mehrzahl von kreisförmigen Kupplungsscheiben (156, 286), die zur Drehung mit dem genannten Abtriebselement angeordnet und mit der genannten ersten Mehrzahl von kreisförmigen Kupplungsscheiben verschachtelt sind, ein zwischen der genannten ersten und zweiten verschachtelten Mehrzahl von Kupplungsscheiben angeordnetes magnetorheologisches Fluid (154) und eine Quelle magnetischen Flusses (200, 330), die neben der genannten ersten und zweiten verschachtelten Mehrzahl von kreisförmigen Kupplungsscheiben angeordnet ist, **dadurch gekennzeichnet, dass** die genannte erste und zweite Mehrzahl von Kupplungsscheiben eine Mehrzahl von gekrümmten Schlitzen (278) hat, in denen gekrümmte Abstandshalter (282) angebracht sind.

2. Verteilergetriebe nach Anspruch 1, bei dem das genannte Antriebselement (122, 254) mit einer Welle (60) gekoppelt ist und das genannte Abtriebselement mit einem Kettenantriebsrad (180, 320) gekoppelt ist.

3. Verteilergetriebe nach Anspruch 1 oder Anspruch 2, das ferner eine Antriebswelle (52) zum Antreiben durch ein Getriebe (14), eine Planetengetriebe-Untersetzungsanordnung (50) mit einem Abtrieb (84) und eine Kupplungsanordnung (90) zum Ineingriffbringen der genannten Antriebswelle mit dem genannten Antriebselement, um einen Direktantrieb zu erzielen, und zum Ineingriffbringen des genannten Abtriebs der genannten Planetengetriebe-Untersetzungsanordnung mit dem genannten Antriebselement, um einen Antrieb mit verringerter Drehzahl zu erzielen.

4. Verteilergetriebe nach einem der vorhergehenden Ansprüche, bei dem das genannte Antriebselement und das genannte Abtriebselement Fluiddichtungen (144, 168, 306, 310) haben.

5. Verteilergetriebe nach einem der vorhergehenden Ansprüche, bei dem die genannte erste und die genannte zweite Mehrzahl von kreisförmigen Scheiben (150, 156) Kränze sind.

6. Verteilergetriebe nach Anspruch 5, das ferner einen Fluss lenkenden Metallring (164) hat, der sich um die genannten Kränze erstreckt.

7. Verteilergetriebe nach Anspruch 5 oder Anspruch 6, bei dem die genannten Kränze aus konzentrisch angeordneten abgestuften Größen und selbstzentrierend sind.

8. Verteilergetriebe nach einem der vorhergehenden Ansprüche, bei dem die genannte Quelle des magnetischen Flusses (200, 330) eine in einem Gehäuse (202, 332) angeordnete elektromagnetische Spule ist.

9. Verteilergetriebe nach einem der Ansprüche 1 bis 7, bei dem die genannte Quelle des magnetischen Flusses (200, 330) eine elektrische Spule ist, die von einem modulierten elektrischen Signal angesteuert wird.

10. Fahrzeugdifferential, umfassend in Kombination ein Antriebsteil (412), ein Radsatz (414, 424), der von dem genannten Antriebsteil angetrieben wird und ein Abtriebsteil (428) hat, ein Paar magnetorheologischer Kupplungsanordnungen (400), die von dem genannten Abtriebsteil angetrieben werden, wobei jede der genannten magnetorheologischen Kupplungsanordnungen ein Antriebselement (446), ein Abtriebselement (480), eine erste Mehrzahl von kreisförmigen Kupplungsscheiben (456), die zur Drehung mit dem genannten Antriebselement angeordnet sind, eine zweite Mehrzahl von kreisförmigen Kupplungsscheiben (468), die zur Drehung mit dem genannten Abtriebselement angeordnet und mit der genannten ersten Mehrzahl von Kupplungselementen verschachtelt sind, ein zwischen der genannten verschachtelten Mehrzahl von Kupplungselementen angeordnetes magnetorheologisches Fluid (154) und eine elektromagnetische Spule (500), die neben der genannten verschachtelten Mehrzahl von Kupplungselementen angeordnet ist, **dadurch gekennzeichnet, dass** die genannte erste und zweite Mehrzahl von kreisförmigen Kupplungsscheiben eine Mehrzahl von gekrümmten Schlitzen (278) hat, in denen gekrümmte Abstandshalter angebracht sind.

## Revendications

1. Boîte de transfert (16) de véhicule automobile comprenant, en combinaison, un élément d'entrée (122, 254), un élément de sortie (164, 302), une première pluralité de disques d'embrayage circulaires (150, 276) disposés pour tourner avec ledit élément d'entrée, une seconde pluralité de disques d'embrayage circulaires (156, 286) disposés pour tourner avec ledit élément de sortie et intercalés entre les disques d'embrayage circulaires de ladite première pluralité, un fluide magnéto-rhéologique (154) interposé entre lesdites première et seconde pluralités de disques d'embrayage, et une source de flux magnétique (200, 330) disposée à proximité desdites première et seconde pluralités de disques d'embrayage circulaires intercalés, **caractérisée en ce que** lesdites première et seconde pluralités de disques d'embrayage comportent une pluralité de fentes courbes (278) dans lesquelles sont montées des entretoises courbes (282).

2. Boîte de transfert selon la revendication 1, dans laquelle ledit élément d'entrée (122, 254) est couplé à un arbre (60) et ledit élément de sortie est couplé à un pignon d'entraînement de chaîne (180, 320).

3. Boîte de transfert selon la revendication 1 ou la revendication 2, comprenant en outre un arbre d'entrée (52) adapté pour être entraîné par une transmission (14), un ensemble réducteur de vitesse à train planétaire (50) ayant une sortie (84) et un ensemble embrayage (90) pour engager ledit arbre d'entrée audit élément d'entrée afin d'obtenir une prise directe et pour engager ladite sortie dudit ensemble réducteur de vitesse à train planétaire audit élément d'entrée afin d'obtenir un entraînement à vitesse réduite.

4. Boîte de transfert selon l'une quelconque des revendications précédentes, dans laquelle ledit élément d'entrée et ledit élément de sortie comprennent des joints à fluide (144, 168, 306, 310).

5. Boîte de transfert selon l'une quelconque des revendications précédentes, dans laquelle lesdites première et seconde pluralités de disques circulaires (150, 156) sont des couronnes.

6. Boîte de transfert selon la revendication 5, comprenant en outre une couronne métallique dirigeant le flux (164) disposée autour desdites couronnes.

7. Boîte de transfert selon la revendication 5 ou la revendication 6, dans laquelle lesdites couronnes sont de tailles graduées disposées concentriquement et sont autocentrées.

8. Boîte de transfert selon l'une quelconque des revendications précédentes, dans laquelle ladite source de flux magnétique (200, 330) est une bobine électromagnétique disposées dans un logement (202, 332).

9. Boîte de transfert selon l'une quelconque des revendications 1 à 7, dans laquelle ladite source de flux magnétique (200, 330) est une bobine électrique commandée par un signal électrique modulé.

10. Différentiel de véhicule automobile comprenant, en combinaison, un composant d'entrée (412), un train d'engrenages (414, 424) entraîné par ledit composant d'entrée et ayant un composant de sortie (428), une paire d'ensembles d'embrayages magnéto-rhéologiques (400) entraînés par ledit composant de sortie, chacun desdits ensembles d'embrayages magnéto-rhéologiques ayant un élément d'entrée (446), un élément de sortie (480), une première pluralité de disques d'embrayage circulaires (456) disposés pour tourner avec ledit élément d'entrée, une seconde pluralité de disques d'embrayages (468) disposés pour tourner avec ledit élément de sortie et intercalés entre lesdits éléments d'embrayage de la première pluralité, un fluide magnéto-rhéologique (154) interposé entre ladite pluralité d'éléments d'embrayage et une bobine électromagnétique (500) disposée à proximité immédiate de ladite pluralité d'éléments d'embrayage intercalés ; **caractérisé en ce que** lesdites première et seconde pluralités de disques d'embrayage circulaires comportent une pluralité de fentes courbes (278) dans lesquelles sont montées des entretoises courbes.
